# EUROPÄISCHE PATENTSCHRIFT

(11) **EP 3 108 360 B1**
(45) Veröffentlichungstag und Bekanntmachung des Hinweises auf die Patenterteilung: **08.01.2020**
(21) Anmeldenummer: 15701168.5
(22) Anmeldetag: 21.01.2015
(51) Int. Cl.: G06F 9/445

(54) **VERGRÖSSERN DES VERFÜGBAREN FLASH-SPEICHERS EINES MICRO-CONTROLLERS**
INCREASING THE AVAILABLE FLASH MEMORY OF A MICRO-CONTROLLER
EXTENSION D'UNE MÉMOIRE FLASH DISPONIBLE D'UN MICROCONTRÔLEUR

(30) Priorität: 20.02.2014 DE 102014203062
(43) Veröffentlichungstag der Anmeldung: 28.12.2016
(73) Patentinhaber: Bayerische Motoren Werke Aktiengesellschaft, 80809 München (DE)
(72) Erfinder: SCHAFFERT, Arnd, 85716 Unterschleissheim (DE)
(86) Internationale Anmeldenummer: PCT/EP2015/051048
(87) Internationale Veröffentlichungsnummer: WO 2015/124351

(56) Entgegenhaltungen:
- EP-A1- 0 991 081
- WO-A1-2005/055244
- DE-A1- 10 321 104
- US-A1- 2002 138 702
- US-A1- 2005 055 496
- US-A1- 2008 001 789
- US-A1- 2009 113 196
- BAHOUT Y: "Combined FLASH and EEPROM integrated circuit", ELEKTRONIK INDUSTRIE, XX, XX, Bd. 28, Nr. 10, 1. Januar 1997 (1997-01-01), Seite 48,50/51, XP002094246,

## Beschreibung

Die vorliegende Erfindung betrifft ein Verfahren zum Bereitstellen eines vergrößerten verfügbaren FLASH-Speichers eines Micro-Controllers und diesbezügliche Vorrichtungen.

Gewöhnliche Micro-Controller, wie sie insbesondere in der Elektronik für Kraftfahrzeuge verbaut werden, verfügen üblicherweise über mehrere Speicherblöcke, wie RAM, FLASH-ROM, EEPROM oder FLASH-ROM mit EEPROM-Emulation.

In dem Artikel "Flash/EEPROM-Kombination" der Zeitschrift elektronik industrie, Ausgabe 10-1997, XP002094246, ist eine Emulation eines EEPROM in einem Teil eines Flash-Speichers offenbart.

Insbesondere werden Micro-Controller mit FLASH-ROM mit EEPROM-Emulation häufig als Alternative für die kostenintensiveren Micro-Controller mit EEPROM in der Fahrzeugelektronik verbaut. Das Programm läuft dabei herkömmlicherweise nur aus dem Code-Bereich des Micro-Controllers, also aus dem FLASH-ROM Speicher mit EEPROM-Emulation. Ist dieser Speicherbereich voll, kann der Micro-Controller keinen weiteren Programmcode mehr aufnehmen.

Insbesondere im Kraftfahrzeugbau existieren lange Produktzyklen, wodurch ein eindesignter Micro-Controller während der betreffenden Produktlebensdauer nach Möglichkeit nicht mehr durch einen anderen Micro-Controller ersetzt wird. Da jedoch mit fortschreitender Dynamisierung beispielsweise von Komfortfunktionen in Kraftfahrzeugen bereits innerhalb eines Produktzyklus vermehrter Bedarf an Softwareänderungen für einzelne Kraftfahrzeugkomponenten besteht, kommt es immer häufiger vor, dass der Programmcode eines Micro-Controllers innerhalb des Produktzyklus größer wird. Somit kann es vorkommen, dass vorhandene Speicherreserven eines verbauten Micro-Controllers innerhalb des Produktzyklus des Kraftfahrzeuges geringer werden oder von Software-Updates, wie beispielsweise eines Firmware-Updates einer Steuerungselektronik, aufgebraucht werden. Im schlimmsten Fall reicht der benötigte Speicherplatz im betreffenden Micro-Controller einer entsprechenden Steuerungselektronik nicht mehr aus, um ein beispielsweise sicherheitskritisches Firmware-Update aufzuspielen. Ist dies der Fall, muss ein größeres Derivat des betreffenden Micro-Controllers verbaut werden, falls dieses überhaupt verfügbar ist. Ansonsten muss mit entsprechend hohem Aufwand die Micro-Controller Familie gewechselt werden. Beides führt in der Regel zu erhöhten Kosten.

Daher wäre es wünschenswert, eine Möglichkeit bereitzustellen, welche in solch kritischen Fällen einen Austausch von Komponenten unnötig macht.

Es ist Ziel der Erfindung eine verbesserte Speicherart für einen Micro-Controller vorzuschlagen, welche zumindest einen Teil der im Stand der Technik bekannten Nachteile vermeidet oder zumindest vermindert.

Die Aufgabe wird erfindungsgemäß gelöst, mittels eines Verfahrens nach dem Anspruch 1, sowie einem weiteren Verfahren nach Anspruch 3 und einer Vorrichtung gemäß Anspruch 12.

Ein Micro-Controller im Sinne der Erfindung kann dabei einen Chip oder auch eine Chip-Elektronik meinen, welche bereits Speicher vorgesehen hat, vorzugsweise mindestens einen ersten Speicher mit schnellem Speicherzugriff und einen zweiten Speicher mit langsamerem Speicherzugriff. Solch ein Micro-Controller kann in Steuergeräten beispielsweise in Kraftfahrzeugen vorgesehen sein, und mittels mindestens eines integrierten und/oder aufspielbaren Programmcodes entsprechende Aufgaben übernehmen, wie beispielsweise als Motorsteuerung in einem Kraftfahrzeug.

Ein Speicher im Sinne der Erfindung meint dabei einen RAM-Speicher, insbesondere einen Flash-Speicher oder einen Flash-Speicher mit EEPROM-Modulation.

Bevorzugt meint der erste Speicher einen RAM-Speicher.

Bevorzugt meint der zweite Speicher einen Flash-Speicher mit EEPROM-Emulation.

Anstatt eines RAM-Speichers, beziehungsweise eines Flash-Speichers mit EEPROM-Emulation, kann jedoch auch ein jeweils anderer Speicher verwendet werden, der entsprechend ähnliche Eigenschaften aufweist.

Ein "Flash-Speicher" im Sinne der Erfindung kann dabei ein Bauelement der Elektrotechnik meinen, welches als digitaler Speicher fungiert. Ein Flash-Speicher kann eine nichtflüchtige Speicherung von digitalen Informationen bei gleichzeitig niedrigem Energieverbrauch gewährleisten. Flash-Speicher sind portabel und miniaturisiert, es lassen sich jedoch im Gegensatz zu einem gewöhnlichen Electrically-Erasable-Programmable-Read-only-Memory (EEPROM)-Speicher die kleinsten adressierbaren Speichereinheiten, nicht einzeln löschen. Damit ist der Hauptunterschied zwischen einem Flash-Speicher und einem EEPROM-Speicher, dass bei dem EEPROM-Speicher jede Speicherzelle individuell löschbar und schreibbar ist. Beim Flash-Speicher sind zwar Speicherzellen individuell schreibbar, jedoch nicht individuell löschbar. Es kann immer nur eine ganze Programmspeicher-Seite gelöscht werden. Um dieses Problem zu vermeiden, werden Flash-Speicher mit EEPROM-Emulation genutzt. Dabei existieren bei der EEPROM-Emulation im Flash-Programmspeicher grundsätzlich zwei Ansätze: a) Es wird eine Programmspeicher-Seite jedes Mal, wenn Daten im Speicher gesichert werden sollen beschreibt und löscht. Diese Methode hat den Nachteil, dass die Speicher nur bis zu 10.000 mal beschrieben werden können. Diese Methode kann für Variablen angewandt werden, die nur wenig über die Lebenszeit des Produktes verändert werden. b) Alle Daten werden in einer oder mehreren Flash-Seiten nacheinander abgespeichert. Ist die Seite voll mit Daten beschrieben, so kann diese gelöscht und wieder von vorne beschrieben werden. Der Vorteil dieser Methode ist, dass sich die Anzahl der Schreibzyklen für die Variablen um den Faktor "Seitengröße geteilt durch Anzahl der Variablen" erhöht. Dabei ist jedoch die gesamte vorhandene Speicherkapazität auf dem Speicher um ein Vielfaches größer, als die verfügbare Speicherkapazität des Speichers.

Eine verfügbare Speicherkapazität im Sinne der Erfindung meint dabei diejenige Speicherkapazität, die im Speicher ansprechbar ist. Damit ist somit derjenige Speicherbereich gemeint, in dem in dem Speicher Informationen ablegbar sind. Die verfügbare Speicherkapazität des Speichers kann wesentlich von der maximal vorhandenen Speicherkapazität des Speichers abweichen.

Eine erste Information mit ausführbarem Code im Sinne der Erfindung kann dabei jeden ausführbaren Code meinen, insbesondere kann damit der eigentliche Programmcode gemeint sein.

Eine zweite Information mit nichtausführbarem Code im Sinne der Erfindung kann dabei jeden nicht ausführbaren Code meinen, insbesondere können damit Daten wie Konstanten, Variablen und dergleichen gemeint sein.

Somit wird der reine Datenteil in dem zweiten Speicher abgelegt, wohingegen der reine Programmdatenteil in dem ersten, schnelleren Speicher, abgelegt wird.

Durch die erfindungsgemäße Lehre wird der Vorteil erreicht, dass die verfügbare Speicherkapazität des zweiten Speichers unter Verzicht auf die EEPROM-Emulation des Speichers vergrößert werden kann. Somit kann ein größeres Programm in dem Micro-Controller genutzt werden, als ursprünglich vorgesehen war. Ist somit der in dem Micro-Controller zu verwendende Programmcode, beispielsweise bei einem Firmware-Update, größer als für den Micro-Controller ursprünglich maximal vorgesehen, können mittels der erfindungsgemäßen Lehre Speicherreserven, welche für andere Zwecke vorgesehen sind, wie beispielsweise einer EEPROM-Emulation, freigegeben werden, um den eigentlich zu großen Programmcode dennoch in dem Micro-Controller aufnehmen zu können. Dadurch können Kosten, welche aufgrund eines entsprechenden Hardwareaustausches und/oder einer Hardwareaufrüstung anfallen würden, reduziert oder vollständig eingespart werden. Ferner kann auch die Programmausführungsgeschwindigkeit optimiert werden, indem der ausführbare Teil des Programms im schnelleren Speicher vorgehalten wird und lediglich der Datenteil des Programms im langsameren Speicher.

Der Gegenstand eines nebengeordneten Anspruches betrifft dabei ein Verfahren zum optimalen Ausnutzen von Flash-Speicher in einem Micro-Controller mit einer Electrically-Erasable-Programmable-Read-only-Memory-Emulation gemäß Anspruch 3.

Durch die erfindungsgemäße Lehre wird der Vorteil erreicht, dass die Programmausführungsgeschwindigkeit optimiert wird, indem der ausführbare Teil des Programms im schnelleren Speicher vorgehalten wird und der danach noch frei verfügbare Speicher des schnellen Speichers noch für zumindest einen Teil der Programmdaten genutzt wird. Dies kann die Ausführgeschwindigkeit des Programmes weiter erhöhen. Ferner kann die gesamte verfügbare Speicherkapazität des ersten und zweiten Speichers maximal ausgenutzt werden, wodurch noch größere Programme im Micro-Controller vorhaltbar werden. Ferner kann das vorgeschlagene Verfahren ebenfalls sämtliche Vorteile des zuvor genannten Verfahrens aufweisen.

Der Gegenstand eines weiteren nebengeordneten Anspruches betrifft dabei eine Micro-Controller Vorrichtung gemäss Anspruch 12.

Durch die erfindungsgemäße Lehre wird der Vorteil erreicht, dass eine Micro-Controller Vorrichtung bereitgestellt werden kann, in welchem die gesamte verfügbare Speicherkapazität des Micro-Controllers maximal ausgenutzt wird, wodurch größere Programme vorhaltbar werden, als bei bekannten Micro-Controller Vorrichtungen mit gleicher nominaler Speicherkapazität.

Eine nominale Speicherkapazität im Sinne der Erfindung meint dabei die vorgesehene verfügbare Speicherkapazität.

Diese kann wesentlich von der maximal vorhandenen Speicherkapazität des Speichers abweichen.

Der Gegenstand eines weiteren nebengeordneten Anspruches betrifft dabei ein Kraftfahrzeug, irgendeine erfindungsgemäße Micro-Controller Vorrichtung aufweisend.

Durch die erfindungsgemäße Lehre wird der Vorteil erreicht, dass ein Kraftfahrzeug bereitgestellt werden kann, in dessen Steuergerät und/oder Steuergeräten ein größeres Programm vorhaltbar wird, als bei bekannten Kraftfahrzeugen mit Steuergeräten mit bekannten Micro-Controllern mit gleicher nominaler Speicherkapazität.

Bevor nachfolgend Ausgestaltungen der Erfindung eingehender beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit in der Beschreibung und den Ansprüchen der Singular verwendet wird ist dabei jeweils der Plural mitumfasst, soweit der Kontext dies nicht explizit ausschließt.

Nachfolgend werden weitere exemplarische Ausgestaltungen des ersten erfindungsgemäßen Verfahrens erläutert.

Entsprechend einer ersten exemplarischen Ausgestaltung weist das Verfahren ferner auf, dass falls die freie Speicherkapazität des zweiten Speichers nach Freigeben der durch das Abschalten der Electrically-Erasable-Programmable-Read-only-Memory-Emulation des zweiten Speichers nicht mehr benötigten Speicherkapazität nicht ausreichend groß ist, um die zweite Information aufzunehmen: Aufteilen der zweiten Information in einen ersten Teil und in einen zweiten Teil, wobei der erste Teil der zweiten Information eine Größe aufweist, welche maximal der freien Speicherkapazität des zweiten Speichers entspricht; ablegen des ersten Teils der zweiten Information in den zweiten Speicher; und ablegen des zweiten Teils der zweiten Information in einen dritten Speicher. Dabei ermöglicht der erste Speicher einen schnelleren Zugriff auf die in ihm abgelegten Informationen als der dritte Speicher.

Diese Ausgestaltung weist den Vorteil auf, dass in dem Fall, dass die verfügbare Speicherkapazität des Micro-Controllers selbst nach Erhöhen der verfügbaren Speicherkapazität mittels Freigeben der nicht mehr für die EEPROM-Emulation benötigten Speicherbereiche nicht ausreichen sollte, die erhöhte verfügbare Speicherkapazität ausgelastet wird, und lediglich für den restlichen nicht ausführbaren Programmteil, welcher nicht mehr aufnehmbar ist, ein zusätzlicher günstiger Speicher genutzt werden kann. Dieser kann auch eine vergleichsweise geringere Speicherkapazität aufweisen und einen langsameren Datenzugriff gewähren und somit kostengünstig im Micro-Controller oder extern vom Micro-Controller vorgesehen sein oder extern vom Micro-Controller nachgerüstet werden.

Nachfolgend werden weitere exemplarische Ausgestaltungen des weiteren erfindungsgemäßen Verfahrens erläutert.

Entsprechend einer ersten exemplarischen Ausgestaltung weist das Verfahren ferner auf, dass falls die freie Speicherkapazität des zweiten Speichers nach Freigeben der durch das Abschalten der Electrically-Erasable-Programmable-Read-only-Memory-Emulation des zweiten Speichers nicht mehr benötigten Speicherkapazität nicht ausreichend groß ist, um den zweiten Teil der zweiten Information aufzunehmen: Aufteilen des zweiten Teils der zweiten Information in einen ersten Unterteil und in einen zweiten Unterteil, wobei der erste Unterteil des zweiten Teils der zweiten Information eine Größe aufweist, welche maximal der freien Speicherkapazität des zweiten Speichers entspricht; ablegen des ersten Unterteils des zweiten Teils der zweiten Information in den zweiten Speicher; und ablegen des zweiten Unterteils des zweiten Teils der zweiten Information in einen dritten Speicher. Dabei ermöglicht der erste Speicher einen schnelleren Zugriff auf die in ihm abgelegten Informationen als der dritte Speicher.

Diese Ausgestaltung weist den Vorteil auf, dass lediglich ein potentiell noch kleinerer Programmteil übrig bleiben kann, der im Micro-Controller nicht untergebracht werden kann und somit ein noch kleinerer dritter Speicher vorsehbar sein kann. Ferner kann die vorgeschlagene exemplarische Ausgestaltung ebenfalls sämtliche Vorteile der zuvor genannten exemplarischen Ausgestaltung aufweisen.

Nachfolgend werden weitere exemplarische Ausgestaltungen der zuvor beschriebenen erfindungsgemäßen Verfahren erläutert.

Entsprechend einer weiteren exemplarischen Ausgestaltung weist das Verfahren ferner auf, dass falls die freie Speicherkapazität des ersten Speichers nicht ausreichend groß ist, um die erste Information aufzunehmen: Aufteilen der ersten Information in einen ersten Teil und in einen zweiten Teil, wobei der erste Teil der ersten Information eine Größe aufweist, welche maximal der freien Speicherkapazität des ersten Speichers entspricht; ablegen des ersten Teils der ersten Information in den ersten Speicher; und ablegen des zweiten Teils der ersten Information in den zweiten Speicher.

Diese Ausgestaltung weist den Vorteil auf, dass es möglich werden kann, selbst in dem Fall, dass die erste Information nicht vollständig in dem schnellen Speicher aufgenommen werden kann, durch das Aufteilen der ersten Information und Ablegen eines Teiles der ersten Information in den zweiten, langsameren Speicher, auf eine Hardware-Aufrüstung und/oder -Umrüstung des Micro-Controllers und/oder des entsprechenden Steuergerätes verzichtet werden kann.

Entsprechend einer weiteren exemplarischen Ausgestaltung weist das Verfahren ferner auf, dass falls die freie Speicherkapazität des zweiten Speichers nicht ausreichend groß ist, um den zweiten Teil der ersten Information aufzunehmen: Abschalten der Electrically-Erasable-Programmable-Read-only-Memory-Emulation des zweiten Speichers; Freigeben der durch das Abschalten der Electrically-Erasable-Programmable-Read-only-Memory-Emulation des zweiten Speichers nicht mehr benötigten Speicherkapazität, wodurch sich die freie Speicherkapazität des zweiten Speichers erhöht; und ablegen des zweiten Teils der ersten Information in den zweiten Speicher.

Diese Ausgestaltung weist den Vorteil auf, dass es möglich werden kann, selbst in dem Fall, dass die erste Information nicht vollständig in dem schnellen Speicher aufgenommen werden kann und der im schnellen Speicher nicht unterbringbare Teil der ersten Information auch in dem nominal verfügbaren Speicher des zweiten Speichers nicht untergerbacht werden kann, mittels Freigeben des für die EEPROM-Emulation vorgesehenen Speicherbereiches der gesamte Code dennoch im Micro-Controller abgelegt werden kann, und somit Nachrüstkoten eingespart werden können.

Entsprechend einer weiteren exemplarischen Ausgestaltung weist das Verfahren ferner auf, dass falls die nach dem Abschalten der Electrically-Erasable-Programmable-Read-only-Memory-Emulation des zweiten Speichers freie Speicherkapazität des zweiten Speichers ausreichend groß ist, um die zweite Information aufzunehmen: Ablegen der zweiten Information in den zweiten Speicher. Oder, falls die nach dem Abschalten der Electrically-Erasable-Programmable-Read-only-Memory-Emulation des zweiten Speichers freie Speicherkapazität des zweiten Speichers nicht ausreichend groß ist, um die zweite Information aufzunehmen: Aufteilen der zweiten Information in einen ersten Teil und in einen zweiten Teil, wobei der erste Teil der zweiten Information eine Größe aufweist, welche maximal der freien Speicherkapazität des zweiten Speichers entspricht; ablegen des ersten Teils der zweiten Information in den zweiten Speicher; und ablegen des zweiten Teils der zweiten Information in den oder einen dritten Speicher.

Der dritte Speicher im Sinne der Erfindung kann dabei ein langsamerer Speicher sein. Es kann auch ein Flash-Speicher mit oder ohne EEPROM-Emulation sein oder auch ein EEPROM-Speicher selbst.

Diese Ausgestaltung weist den Vorteil auf, dass die erhöhte verfügbare Speicherkapazität noch besser ausgelastet werden kann, und lediglich für den restlichen nicht ausführbaren Programmteil, welcher nicht mehr im Micro-Controller aufnehmbar ist, ein zusätzlicher günstiger Speicher genutzt werden kann. Dieser kann auch eine vergleichsweise geringere Speicherkapazität aufweisen und einen langsameren Datenzugriff gewähren und somit kostengünstig im Micro-Controller oder extern vom Micro-Controller vorgesehen sein oder extern vom Micro-Controller nachgerüstet werden.

Entsprechend einer weiteren exemplarischen Ausgestaltung weist das Verfahren ferner auf, dass falls die freie Speicherkapazität des zweiten Speichers nach Freigeben der durch das Abschalten der Electrically-Erasable-Programmable-Read-only-Memory-Emulation des zweiten Speichers nicht mehr benötigten Speicherkapazität nicht ausreichend groß ist, um den zweiten Teil der ersten Information aufzunehmen: Aufteilen des zweiten Teils der ersten Information in einen ersten Unterteil und in einen zweiten Unterteil, wobei der erste Unterteil des zweiten Teils der ersten Information eine Größe aufweist, welche maximal der freien Speicherkapazität des zweiten Speichers entspricht; ablegen des ersten Unterteils des zweiten Teils der ersten Information in den zweiten Speicher; ablegen des zweiten Unterteils des zweiten Teils der ersten Information in einen dritten Speicher; und ablegen der zweiten Information in den dritten Speicher und/oder einen weiteren Speicher. Dabei ermöglicht der zweite Speicher einen schnelleren Zugriff auf die in ihm abgelegten Informationen, als der dritte und/oder weitere Speicher.

Diese Ausgestaltung weist den Vorteil auf, dass zunächst der ausführbare Programmcode gemäß der Zugriffsgeschwindigkeiten der beiden Speicher untergebracht wird und der Datenteil des Programmcodes in entsprechenden weiteren Speichern abgelegt werden kann. Somit werden zunächst erst weniger Geschwindigkeitskritische Programmteile aus dem Micro-Controller ausgelagert, falls die Speicherkapazität des Micro-Controllers nicht ausreichend groß für die Aufnahme des vollständigen Programmcodes sein sollte.

Entsprechend einer weiteren exemplarischen Ausgestaltung weist das Verfahren ferner auf, dass falls die freie Speicherkapazität des zweiten Speichers ausreichend groß ist, um die zweite Information aufzunehmen: Ablegen der zweiten Information in den zweiten Speicher. Oder, dass falls die freie Speicherkapazität des zweiten Speichers nicht ausreichend groß ist, um die zweite Information aufzunehmen: Abschalten der Electrically-Erasable-Programmable-Read-only-Memory-Emulation des zweiten Speichers; Freigeben der durch das Abschalten der Electrically-Erasable-Programmable-Read-only-Memory-Emulation des zweiten Speichers nicht mehr benötigten Speicherkapazität, wodurch sich die freie Speicherkapazität des zweiten Speichers erhöht; und ablegen der zweiten Information in den zweiten Speicher.

Diese Ausgestaltung weist den Vorteil auf, dass zunächst der ausführbare Programmcode gemäß der Zugriffsgeschwindigkeiten der beiden Speicher untergebracht wird und der Datenteil des Programmcodes in entsprechenden nachgelagerten Speichern abgelegt werden kann. Ferner wird zunächst die verfügbare Speicherkapazität erhöht, bevor ein weiterer Speicher genutzt werden muss. Somit werden zunächst erst weniger Geschwindigkeitskritische Programmteile aus dem Micro-Controller ausgelagert, falls die Speicherkapazität des Micro-Controllers nicht ausreichend groß für die Aufnahme des vollständigen Programmcodes sein sollte.

Entsprechend einer weiteren exemplarischen Ausgestaltung weist das Verfahren ferner auf, dass falls die freie Speicherkapazität des zweiten Speichers nach Freigeben der durch das Abschalten der Electrically-Erasable-Programmable-Read-only-Memory-Emulation des zweiten Speichers nicht mehr benötigten Speicherkapazität nicht ausreichend groß ist, um die zweite Information aufzunehmen: Aufteilen der zweiten Information in einen ersten Teil und in einen zweiten Teil, wobei der erste Teil der zweiten Information eine Größe aufweist, welche maximal der freien Speicherkapazität des zweiten Speichers entspricht; ablegen des ersten Teils der zweiten Information in den zweiten Speicher; und ablegen des zweiten Teils der zweiten Information in einen dritten Speicher. Dabei ermöglicht der zweite Speicher einen schnelleren Zugriff auf die in ihm abgelegten Informationen als der dritte Speicher.

Diese Ausgestaltung weist den Vorteil auf, dass die erhöhte verfügbare Speicherkapazität noch besser ausgelastet werden kann, und lediglich für den restlichen nicht ausführbaren Programmteil, welcher nicht mehr im Micro-Controller aufnehmbar ist, ein zusätzlicher günstiger Speicher genutzt werden kann. Dieser kann auch eine vergleichsweise geringere Speicherkapazität aufweisen und einen langsameren Datenzugriff gewähren und somit kostengünstig im Micro-Controller oder extern vom Micro-Controller vorgesehen sein oder extern vom Micro-Controller nachgerüstet werden.

Entsprechend einer weiteren exemplarischen Ausgestaltung weist das Verfahren ferner auf: Vor dem Ablegen der entsprechenden Information, des entsprechenden Teiles der entsprechenden Information oder des entsprechenden Unterteiles des entsprechenden Teiles der entsprechenden Information in den entsprechenden Speicher, expandieren der entsprechenden Information, des entsprechenden Teiles der entsprechenden Information oder des entsprechenden Unterteiles des entsprechenden Teiles der entsprechenden Information aus dem zweiten Speicher, dem dritten Speicher und/oder dem weiteren Speicher. Dabei ermöglicht der erste Speicher einen schnelleren Zugriff auf die in ihm abgelegten Informationen als der weitere Speicher.

Ein Expandieren einer Information im Sinne der Erfindung meint dabei, dass eine Information, welche zuvor komprimiert in einem Speicher abgelegt wurde, wieder auf ihre Quellgröße ausgeweitet wird, das heißt, dass die Komprimierung der Information rückgängig gemacht wird.

Diese Ausgestaltung weist den Vorteil auf, dass der Programmcode zunächst in komprimierter Weise im Micro-Controller vorgehalten oder in diesen aufgespielt werden kann und lediglich bei Bedarf in die entsprechenden Speicher des Micro-Controllers expandiert werden kann. Somit kann es möglich werden, dass für das Vorhalten und/oder aufspielen des Programmcodes kein zusätzlicher Speicher benötigt wird. Dadurch können erneut Kosten reduziert werden.

Entsprechend einer weiteren exemplarischen Ausgestaltung weist das Verfahren ferner nach Abschalten der Electrically-Erasable-Programmable-Read-only-Memory-Emulation des zweiten Speichers auf, dass das Ablegen der zweiten Information in den zweiten Speicher vorzugsweise in demjenigen Teil des zweiten Speichers erfolgt, welcher durch das Abschalten der Electrically-Erasable-Programmable-Read-only-Memory-Emulation des zweiten Speichers freigeworden ist.

Diese Ausgestaltung weist den Vorteil auf, dass der zweiten Information ein Speicherbereich zugewiesen werden kann, in welchem gewöhnlicher weise kein Programmcode ausführbar ist. Dieser Speicherbereich steht dann für die erste Information nicht mehr zur Verfügung, kann sich somit nicht negativ auf die Ausführbarkeit des Codes der ersten Information auswirken.

Nachfolgend werden weitere exemplarische Ausgestaltungen der Micro-Controller Vorrichtung erläutert.

Entsprechend einer ersten exemplarischen Ausgestaltung weist die Vorrichtung einen dritten Speicher auf. Dabei ermöglicht der dritte Speicher einen schnelleren Zugriff auf die in ihm abgelegten Informationen als der zweite Speicher. Der dritte Speicher ist vorzugsweise ein Electrically-Erasable-Programmable-Read-only-Memory-Speicher.

Da sich ein EEPROM-Speicher sehr gut zur Speicherung kleinerer Datenmengen eignet, bei denen die Information auch ohne anliegende Versorgungsspannung erhalten bleiben muss oder bei denen einzelne Speicherelemente beziehungsweise Datenworte einfach geändert werden können müssen, ist dieser Speicher optimal für die Speicherung zumindest eines Teiles der zweiten Information geeignet. Auch eignet er sich sehr gut zur Aufnahme zumindest eines Teiles des komprimierten Programmcodes, insbesondere da in ihm die Informationen auch ohne anliegende Versorgungsspannung erhalten bleiben kann.

Anstatt eines EEPROM-Speichers kann jedoch auch ein anderer Speicher verwendet werden, der ähnliche Eigenschaften aufweist.

Diese Ausgestaltung weist den Vorteil auf, dass für den nichtausführbaren Teil des Programmcodes des Micro-Controllers und/oder für den komprimierten Programmcode ein sehr gut geeigneter Speicher bereitgestellt werden kann.

Entsprechend einer weiteren exemplarischen Ausgestaltung weist die Vorrichtung ferner einen weiteren Speicher auf. Dabei ermöglicht der erste Speicher einen schnelleren Zugriff auf die in ihm abgelegten Informationen als der weitere Speicher. Ferner ermöglichen der zweite und/oder dritte Speicher vorzugsweise einen schnelleren Zugriff auf die in ihm abgelegten Informationen als der weitere Speicher.

Der weitere Speicher im Sinne der Erfindung meint einen Speicher, an welchem geringere Anforderungen bezüglich beispielsweise Zugriffsgeschwindigkeit und Ablegbarkeit von ausführbarem Programmcode gestellt werden können, als an den ersten Speicher und vorzugsweise auch als an den zweiten und/oder dritten Speicher.

Diese Ausgestaltung weist den Vorteil auf, dass ein weiterer Speicher bereit gestellt werden kann, in welchem kostengünstig Programmteile und/oder zumindest Teile des komprimierten Programmcodes abgelegt werden können.

Die Erfindung erlaubt es somit, Programmcode, welcher herkömmlicher Weise in einem entsprechenden Micro-Controller nicht mehr vollständig ablegbar wäre, dennoch in dem Micro-Controller und/oder in zu diesem zugehörigen Speichern abzulegen. Dadurch können Aufrüst- und Umrüstkosten vermieden beziehungsweise reduziert werden.

Die Erfindung wird nachfolgend eingehender an Hand der Figuren erläutert werden. In diesen zeigen:
Fig. 1 ein schematisches Ablaufdiagramm eines vorgeschlagenen Verfahrens gemäß einer beispielhaften Ausgestaltung der Erfindung;
Fig. 2 ein schematisches Ablaufdiagramm eines vorgeschlagenen Verfahrens gemäß einer weiteren beispielhaften Ausgestaltung der Erfindung;
Fig. 3 ein schematisches Ablaufdiagramm eines vorgeschlagenen Verfahrens gemäß einer weiteren beispielhaften Ausgestaltung der Erfindung; und
Fig. 4 ein schematisches Ablaufdiagramm eines vorgeschlagenen Verfahrens gemäß einer weiteren beispielhaften Ausgestaltung der Erfindung.

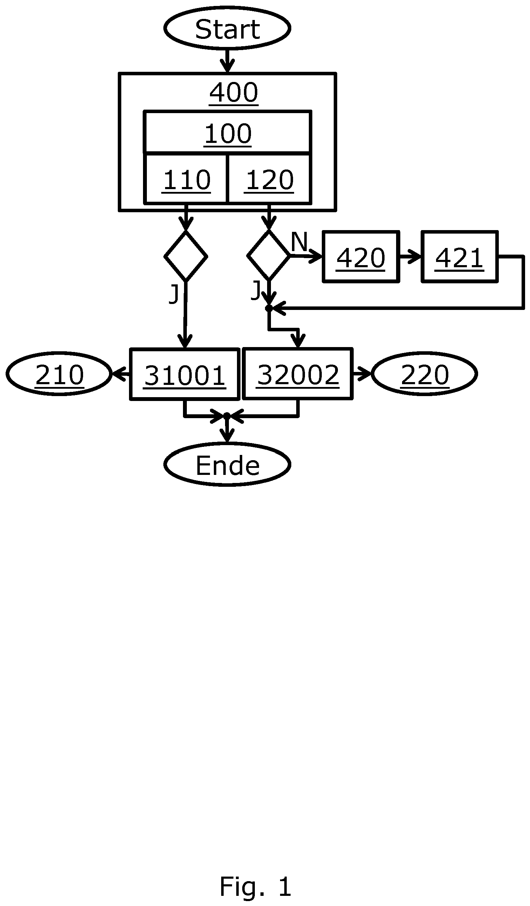

Fig. 1 zeigt ein schematisches Ablaufdiagramm eines vorgeschlagenen Verfahrens gemäß einer beispielhaften Ausgestaltung der Erfindung.

Dabei zeigt Fig. 1 ein Ablaufdiagramm eines Verfahren zum optimalen Ausnutzen von Flash-Speicher in einem Micro-Controller mit einer Electrically-Erasable-Programmable-Read-only-Memory-Emulation, wobei das Verfahren aufweist: Aufteilen 400 einer in einen Computer-Speicher abzulegenden Information 100 in eine erste Information 110 mit ausführbarem Code und in eine zweite Information 120 mit nichtausführbarem Code. Falls eine freie Speicherkapazität eines ersten Speichers 210 ausreichend groß ist, um die erste Information 110 aufzunehmen: Ablegen 31001 der ersten Information 110 in den ersten Speicher 210. Falls eine freie Speicherkapazität eines zweiten Speichers 220 ausreichend groß ist, um die zweite Information 220 aufzunehmen: Ablegen 32002 der zweiten Information 120 in den zweiten Speicher 220. Oder falls die freie Speicherkapazität 220 des zweiten Speichers 120 nicht ausreichend groß ist, um die zweite Information 120 aufzunehmen: Abschalten 420 einer Electrically-Erasable-Programmable-Read-only-Memory-Emulation des zweiten Speichers 220; freigeben 421 der durch das Abschalten 420 der Electrically-Erasable-Programmable-Read-only-Memory-Emulation des zweiten Speichers 220 nicht mehr benötigten Speicherkapazität, wodurch sich die freie Speicherkapazität des zweiten Speichers 220 erhöht; und Ablegen 32002 der zweiten Information 120 in den zweiten Speicher 220. Dabei ermöglicht der erste Speicher 210 einen schnelleren Zugriff auf die in ihm abgelegten Informationen als der zweite Speicher 220.

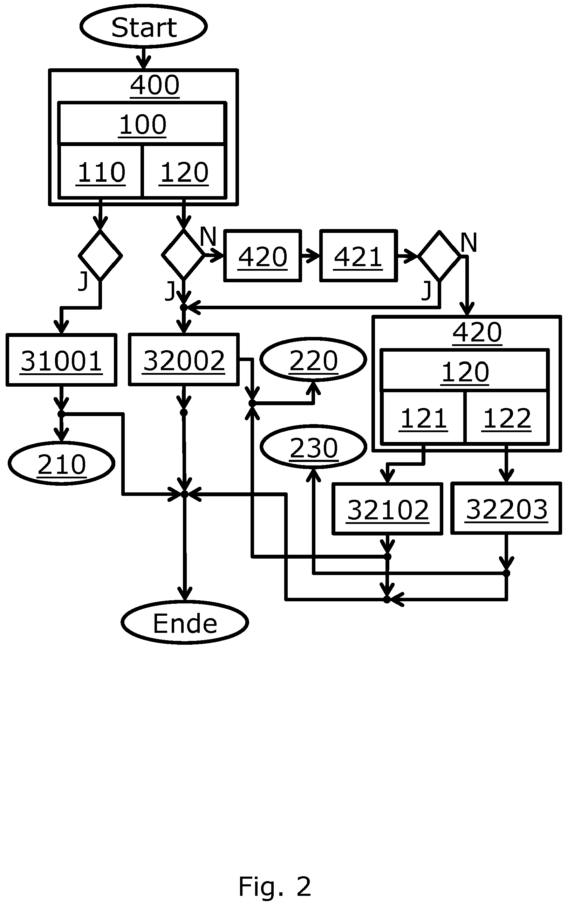

Fig. 2 zeigt ein schematisches Ablaufdiagramm eines vorgeschlagenen Verfahrens gemäß einer weiteren beispielhaften Ausgestaltung der Erfindung.

Dabei zeigt Fig. 2 ein Ablaufdiagramm eines gegenüber dem Verfahren aus Fig.1 erweiterten Verfahrens. Das zuvor zu Fig. 1 Gesagte gilt entsprechend für Fig. 2 fort.

Wie Fig. 2 entnommen werden kann, weist das Verfahren darüber hinaus auf, dass falls die freie Speicherkapazität des zweiten Speichers 220 nach Freigeben 421 der durch das Abschalten 420 der Electrically-Erasable-Programmable-Read-only-Memory-Emulation des zweiten Speichers 220 nicht mehr benötigten Speicherkapazität nicht ausreichend groß ist, um die zweite Information 120 aufzunehmen: Aufteilen 422 der zweiten Information 120 in einen ersten Teil 121 und in einen zweiten Teil 122, wobei der erste Teil 121 der zweiten Information 120 eine Größe aufweist, welche maximal der freien Speicherkapazität des zweiten Speichers 220 entspricht. Ablegen 32102 des ersten Teils 121 der zweiten Information 120 in den zweiten Speicher 220. Ablegen 32203 des zweiten Teils 122 der zweiten Information 120 in einen dritten Speicher 230. Dabei ermöglicht der erste Speicher 210 einen schnelleren Zugriff auf die in ihm abgelegten Informationen als der dritte Speicher 230.

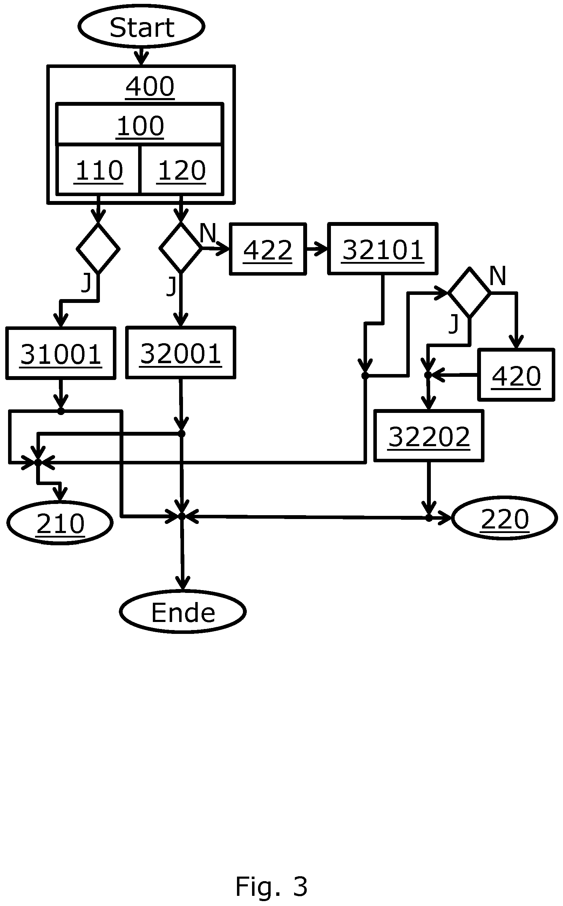

Fig. 3 zeigt ein schematisches Ablaufdiagramm eines vorgeschlagenen Verfahrens gemäß einer weiteren beispielhaften Ausgestaltung der Erfindung.

Dabei zeigt Fig. 3 ein 1. Verfahren zum optimalen Ausnutzen von Flash-Speicher in einem Micro-Controller mit einer Electrically-Erasable-Programmable-Read-only-Memory-Emulation, wobei das Verfahren aufweist: Aufteilen 400 einer in einen Computer-Speicher abzulegenden Information 100 in eine erste Information 110 mit ausführbarem Code und in eine zweite Information 120 mit nichtausführbarem Code. Falls eine freie Speicherkapazität eines ersten Speichers 210 ausreichend groß ist, um die erste Information 110 aufzunehmen: Ablegen 31001 der ersten Information 110 in den ersten Speicher 210. Falls die freie Speicherkapazität des ersten Speichers 210 ausreichend groß ist, um die zweite Information 120 aufzunehmen: Ablegen 32001 der zweiten Information 120 in den ersten Speicher 210. Oder falls die freie Speicherkapazität des ersten Speichers 210 nicht ausreichend groß ist, um die zweite Information 120 aufzunehmen: Aufteilen 422 der zweiten Information 120 in einen ersten Teil 121 und in einen zweiten Teil 122, wobei der erste Teil 121 der zweiten Information 120 eine Größe aufweist, welche maximal der freien Speicherkapazität des ersten Speichers 210 entspricht. Ablegen 32101 des ersten Teils 121 der zweiten Information 120 in den ersten Speicher 210. Und falls die freie Speicherkapazität eines zweiten Speichers 220 ausreichend groß ist, um den zweiten Teil 122 der zweiten Information 120 aufzunehmen: Ablegen 32202 des zweiten Teils 122 der zweiten Information 120 in den zweiten Speicher 220. Oder falls die freie Speicherkapazität des zweiten Speichers 220 nicht ausreichend groß ist, um die zweite Information 120 aufzunehmen: Abschalten 420 einer Electrically-Erasable-Programmable-Read-only-Memory-Emulation des zweiten Speichers 220. Freigeben 421 der durch das Abschalten der Electrically-Erasable-Programmable-Read-only-Memory-Emulation des zweiten Speichers 220 nicht mehr benötigten Speicherkapazität, wodurch sich die freie Speicherkapazität des zweiten Speichers 220 erhöht. Ablegen 32202 des zweiten Teils 122 der zweiten Information 120 in den zweiten Speicher 220. Dabei ermöglicht der erste Speicher 210 einen schnelleren Zugriff auf die in ihm abgelegten Informationen als der zweite Speicher 220.

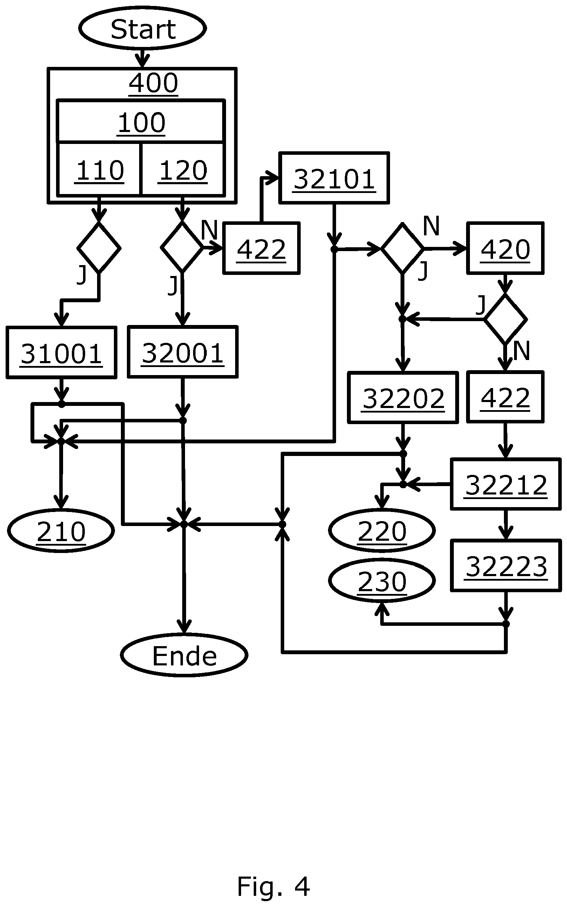

Fig. 4 zeigt ein schematisches Ablaufdiagramm eines vorgeschlagenen Verfahrens gemäß einer weiteren beispielhaften Ausgestaltung der Erfindung.

Dabei zeigt Fig. 4 ein Ablaufdiagramm eines gegenüber dem Verfahren aus Fig.3 erweiterten Verfahrens. Das zuvor zu Fig. 3 Gesagte gilt entsprechend für Fig. 4 fort.

Wie Fig. 4 entnommen werden kann, weist das Verfahren darüber hinaus auf, dass falls die freie Speicherkapazität des zweiten Speichers nach Freigeben 421 der durch das Abschalten 420 der Electrically-Erasable-Programmable-Read-only-Memory-Emulation des zweiten Speichers 220 nicht mehr benötigten Speicherkapazität nicht ausreichend groß ist, um den zweiten Teil 122 der zweiten Information 120 aufzunehmen: Aufteilen 4222 des zweiten Teils 122 der zweiten Information 120 in einen ersten Unterteil 1221 und in einen zweiten Unterteil 1222, wobei der erste Unterteil 1221 des zweiten Teils 122 der zweiten Information 120 eine Größe aufweist, welche maximal der freien Speicherkapazität des zweiten Speichers 220 entspricht. Ablegen 32212 des ersten Unterteils 1221 des zweiten Teils 122 der zweiten Information 120 in den zweiten Speicher 220. Ablegen 32223 des zweiten Unterteils 1222 des zweiten Teils 122 der zweiten Information 120 in einen dritten Speicher 230. Dabei ermöglicht der erste Speicher 210 einen schnelleren Zugriff auf die in ihm abgelegten Informationen als der dritte Speicher 230.

Die Erfindungsidee kann wie folgt zusammengefasst werden. Sofern es sich bei den vorgenannten Code-Mehrungen um nur begrenzte Umfänge handelt, wird es möglich, gewöhnlicher weise nicht für diesen Zweck genutzte oder sogar brach liegende Speicherbereiche, im konkreten Fall Teile des internen RAM und Teile der internen EEPROM-Emulation dazu nutzen, um dort Code, also ausführbaren Programmcode und/oder nichtausführbaren Programmcode abzulegen. Nichtausführbarer Programmcode kann dabei Codebestandteile wie beispielsweise Daten und Tabellen sein. Handelt es sich bei dem betroffenen Bereich um flüchtigen Speicher, wie das RAM, ist Betriebsvoraussetzung lediglich, dass diese Code-Teile aus einem externen Speichermedium, wie einem externen Flash-Baustein oder einem externen EEPROM nachgeladen werden, bevor das eigentliche Programm gestartet wird, zum Beispiel nach einem Hardware- und/oder Software-Reset. In solch einem EEPROM bleibt der so behandelte Code auch über stromlose Zeiten des Micro-Controllers dauerhaft gespeichert. Durch die Verwendung eines günstigen externen Speicherbausteins ohne besondere Performance-Ansprüche kann der Übergang auf einen weit teureren Micro-Controller mit größerem internen Flash-Speicher oder auf ein noch teureres Zwei-Prozessor-System oder ein nochmal teureres Zwei-Steuergeräte-System vermieden werden.

### Bezugszeichenliste

- 100: abzulegende Information
- 110: erste Information
- 111: erster Teil der ersten Information
- 112: zweiter Teil der ersten Information
- 120: zweite Information
- 121: erster Teil der zweiten Information
- 122: zweiter Teil der zweiten Information
- 210: erster Speicher
- 220: zweiter Speicher
- 230: dritter Speicher
- 240: weiterer Speicher
- 420: Abschalten einer Electrically-Erasable-Programmable-Read-only-Memory-Emulation des zweiten Speichers
- 421: Freigeben der nicht mehr benötigten Speicherkapazität
- 422: Aufteilen der entsprechenden Information in einen ersten Teil und in einen zweiten Teil
- 500: Expandieren der entsprechenden Information

## Patentansprüche

1. Ein Verfahren zum Bereitstellen eines vergrößerten verfügbaren Flash-Speichers in einem Micro-Controller mit einer Electrically-Erasable-Programmable-Read-only-Memory-Emulation, wobei ein erster Speicher (210) und ein zweiter Speicher (220) in dem Micro-Controller vorgesehen sind, um eine abzulegende Information (100) zu speichern,
- wobei der erste Speicher (210)
- einen wahlfreien Zugriff ermöglicht,
- das Ausführen von ausführbarem Code ermöglicht, und
- einen schnelleren Zugriff auf die in ihm abgelegten Informationen ermöglicht als der zweite Speicher (220),
- wobei der zweite Speicher (220) der Flash-Speicher ist, welcher eine Electrically-Erasable-Programmable-Read-only-Memory-Emulation ermöglicht, und
- wobei die Electrically-Erasable-Programmable-Read-only-Memory-Emulation des zweiten Speichers (220) abschaltbar ist, und
wobei das Verfahren aufweist:
- Aufteilen (400) der Information (100) in eine erste Information (110) mit ausführbarem Code und in eine zweite Information (120) mit Daten,
- falls eine freie Speicherkapazität des ersten Speichers (210) ausreichend groß ist, um die erste Information (110) aufzunehmen,
- Ablegen (31001) der ersten Information (110) in den ersten Speicher (210),
- falls eine freie Speicherkapazität des zweiten Speichers (220) ausreichend groß ist, um die zweite Information (220) aufzunehmen,
- Ablegen (32002) der zweiten Information (120) in den zweiten Speicher (220),
- falls die freie Speicherkapazität des zweiten Speichers (220) nicht ausreichend groß ist, um die zweite Information (120) aufzunehmen,
- Abschalten (420) der Electrically-Erasable-Programmable-Read-only-Memory-Emulation des zweiten Speichers (220),
- Freigeben (421) der durch das Abschalten (420) der Electrically-Erasable-Programmable-Read-only-Memory-Emulation des zweiten Speichers (220) nicht mehr benötigten Speicherkapazität, wodurch sich die freie Speicherkapazität des zweiten Speichers (220) erhöht,
- Ablegen (32002) der zweiten Information (120) in den zweiten Speicher (220).

2. Das Verfahren gemäß Anspruch 1, ferner aufweisend:
- falls die freie Speicherkapazität des zweiten Speichers (220) nach Freigeben (421) der durch das Abschalten (420) der Electrically-Erasable-Programmable-Read-only-Memory-Emulation des zweiten Speichers (220) nicht mehr benötigten Speicherkapazität nicht ausreichend groß ist, um die zweite Information (120) aufzunehmen,
- Aufteilen (422) der zweiten Information (120) in einen ersten Teil (121) und in einen zweiten Teil (122), wobei
- der erste Teil (121) der zweiten Information (120) eine Größe aufweist, welche maximal der freien Speicherkapazität des zweiten Speichers (220) entspricht,
- Ablegen (32102) des ersten Teils (121) der zweiten Information (120) in den zweiten Speicher (220),
- Ablegen (32203) des zweiten Teils (122) der zweiten Information (120) in einen dritten Speicher (230), und wobei
- der erste Speicher (210) einen schnelleren Zugriff auf die in ihm abgelegten Informationen ermöglicht als der dritte Speicher (230).

3. Ein Verfahren zum Bereitstellen eines vergrößerten verfügbaren Flash-Speichers in einem Micro-Controller mit einer Electrically-Erasable-Programmable-Read-only-Memory-Emulation, wobei ein erster Speicher (210) und ein zweiter Speicher (220) in dem Micro-Controller vorgesehen sind, um eine abzulegende Information (100) zu speichern,
- wobei der erste Speicher (210)
- einen wahlfreien Zugriff ermöglicht,
- das Ausführen von ausführbarem Code ermöglicht, und
- einen schnelleren Zugriff auf die in ihm abgelegten Informationen ermöglicht als der zweite Speicher (220)
- wobei der zweite Speicher (220) der Flash-Speicher ist, welcher eine Electrically-Erasable-Programmable-Read-only-Memory-Emulation ermöglicht, und
- wobei die Electrically-Erasable-Programmable-Read-only-Memory-Emulation des zweiten Speichers (220) abschaltbar ist,
wobei das Verfahren aufweist:
- Aufteilen (400) der Information (100) in eine erste Information (110) mit ausführbarem Code und in eine zweite Information (120) mit Daten,
- falls eine freie Speicherkapazität des ersten Speichers (210) ausreichend groß ist, um die erste Information (110) aufzunehmen,
- Ablegen (31001) der ersten Information (110) in den ersten Speicher (210),
- falls die freie Speicherkapazität des ersten Speichers (210) ausreichend groß ist, um die zweite Information (220) aufzunehmen,
- Ablegen (32001) der zweiten Information (120) in den ersten Speicher (210),
- falls die freie Speicherkapazität des ersten Speichers (210) nicht ausreichend groß ist, um die zweite Information (120) aufzunehmen,
- Aufteilen (422) der zweiten Information (120) in einen ersten Teil (121) und in einen zweiten Teil (122), wobei
- der erste Teil (122) der zweiten Information (120) eine Größe aufweist, welche maximal der freien Speicherkapazität des ersten Speichers (210) entspricht,
- Ablegen (32101) des ersten Teils (121) der zweiten Information (120) in den ersten Speicher (210), und
- falls die freie Speicherkapazität des zweiten Speichers (220) ausreichend groß ist, um den zweiten Teil (122) der zweiten Information (120) aufzunehmen,
- Ablegen (32202) des zweiten Teils (122) der zweiten Information (120) in den zweiten Speicher (220),
- oder falls die freie Speicherkapazität des zweiten Speichers (220) nicht ausreichend groß ist, um die zweite Information (120) aufzunehmen,
- Abschalten (420) der Electrically-Erasable-Programmable-Read-only-Memory-Emulation des zweiten Speichers (220),
- Freigeben (421) der durch das Abschalten (420) der Electrically-Erasable-Programmable-Read-only-Memory-Emulation des zweiten Speichers (220) nicht mehr benötigten Speicherkapazität, wodurch sich die freie Speicherkapazität des zweiten Speichers (220) erhöht,
- Ablegen (32202) des zweiten Teils (122) der zweiten Information (120) in den zweiten Speicher (220).

4. Das Verfahren gemäß Anspruch 3, ferner aufweisend:
- falls die freie Speicherkapazität des zweiten Speichers nach Freigeben (421) der durch das Abschalten (420) der Electrically-Erasable-Programmable-Read-only-Memory-Emulation des zweiten Speichers (220) nicht mehr benötigten Speicherkapazität nicht ausreichend groß ist, um den zweiten Teil (122) der zweiten Information aufzunehmen (120),
- Aufteilen (4222) des zweiten Teils (122) der zweiten Information (120) in einen ersten Unterteil (1221) und in einen zweiten Unterteil (1222), wobei
- der erste Unterteil (1221) des zweiten Teils (122) der zweiten Information (120) eine Größe aufweist, welche maximal der freien Speicherkapazität des zweiten Speichers (220) entspricht,
- Ablegen (32212) des ersten Unterteils (1221) des zweiten Teils (122) der zweiten Information (120) in den zweiten Speicher (220),
- Ablegen (32223) des zweiten Unterteils (1222) des zweiten Teils (122) der zweiten Information (120) in einen dritten Speicher (230), und wobei
- der erste Speicher (210) einen schnelleren Zugriff auf die in ihm abgelegten Informationen ermöglicht als der dritte Speicher (230).

5. Das Verfahren gemäß irgendeinem der vorhergehenden Ansprüche, ferner aufweisend:
- falls die freie Speicherkapazität des ersten Speichers (210) nicht ausreichend groß ist, um die erste Information (110) aufzunehmen,
- Aufteilen (412) der ersten Information (110) in einen ersten Teil (111) und in einen zweiten Teil (112), wobei
- der erste Teil (111) der ersten Information (110) eine Größe aufweist, welche maximal der freien Speicherkapazität des ersten Speichers (210) entspricht,
- Ablegen (31101) des ersten Teils (111) der ersten Information (110) in den ersten Speicher (210), und
- Ablegen (31202) des zweiten Teils (112) der ersten Information (110) in den zweiten Speicher (220).

6. Das Verfahren gemäß Anspruch 5, ferner aufweisend:
- falls die freie Speicherkapazität des zweiten Speichers (220) nicht ausreichend groß ist, um den zweiten Teil (112) der ersten Information (110) aufzunehmen,
- Abschalten (420) der Electrically-Erasable-Programmable-Read-only-Memory-Emulation des zweiten Speichers,
- Freigeben (421) der durch das Abschalten (420) der Electrically-Erasable-Programmable-Read-only-Memory-Emulation des zweiten Speichers (220) nicht mehr benötigten Speicherkapazität, wodurch sich die freie Speicherkapazität des zweiten Speichers (220) erhöht, und
- Ablegen (31202) des zweiten Teils (112) der ersten Information (110) in den zweiten Speicher (220).

7. Das Verfahren gemäß Anspruch 6, ferner aufweisend:
- falls die nach dem Abschalten (420) der Electrically-Erasable-Programmable-Read-only-Memory-Emulation des zweiten Speichers (220) freie Speicherkapazität des zweiten Speichers (220) ausreichend groß ist, um die zweite Information (120) aufzunehmen,
- Ablegen (32002) der zweiten Information (120) in den zweiten Speicher (220),
- oder falls die nach dem Abschalten (420) der Electrically-Erasable-Programmable-Read-only-Memory-Emulation des zweiten Speichers (220) freie Speicherkapazität des zweiten Speichers (220) nicht ausreichend groß ist, um die zweite Information (120) aufzunehmen,
- Aufteilen (422) der zweiten Information (120) in einen ersten Teil (121) und in einen zweiten Teil (122), wobei
- der erste Teil (121) der zweiten Information (120) eine Größe aufweist, welche maximal der freien Speicherkapazität des zweiten Speichers (220) entspricht,
- Ablegen (32102) des ersten Teils (121) der zweiten Information (120) in den zweiten Speicher (220), und
- Ablegen (32203) des zweiten Teils (122) der zweiten Information (120) in den oder einen dritten Speicher (230).

8. Das Verfahren gemäß Anspruch 6 oder 7, ferner aufweisend:
- falls die freie Speicherkapazität des zweiten Speichers (220) nach Freigeben (421) der durch das Abschalten (420) der Electrically-Erasable-Programmable-Read-only-Memory-Emulation des zweiten Speichers (220) nicht mehr benötigten Speicherkapazität nicht ausreichend groß ist, um den zweiten Teil (112) der ersten Information (110) aufzunehmen,
- Aufteilen (4122) des zweiten Teils (112) der ersten Information (110) in einen ersten Unterteil (1121) und in einen zweiten Unterteil (1122), wobei
- der erste Unterteil (1121) des zweiten Teils (112) der ersten Information (110) eine Größe aufweist, welche maximal der freien Speicherkapazität des zweiten Speichers (220) entspricht,
- Ablegen (31212) des ersten Unterteils (1121) des zweiten Teils (112) der ersten Information (110) in den zweiten (220) Speicher,
- Ablegen (31223) des zweiten Unterteils (1122) des zweiten Teils (112) der ersten Information (110) in einen dritten Speicher (230),
- Ablegen (32003) der zweiten Information (120) in den dritten Speicher (230) und/oder einen weiteren Speicher (240), und wobei
- der zweiten Speicher (220) einen schnelleren Zugriff auf die in ihm abgelegten Informationen ermöglicht, als der dritte (230) und/oder weitere Speicher (240).

9. Das Verfahren gemäß Anspruch 5, ferner aufweisend:
- falls die freie Speicherkapazität des zweiten Speichers (220) ausreichend groß ist, um die zweite Information (120) aufzunehmen,
- Ablegen (32002) der zweiten Information (120) in den zweiten Speicher (220),
- oder falls die freie Speicherkapazität des zweiten Speichers (220) nicht ausreichend groß ist, um die zweite Information (120) aufzunehmen,
- Abschalten (420) der Electrically-Erasable-Programmable-Read-only-Memory-Emulation des zweiten Speichers (220),
- Freigeben (421) der durch das Abschalten (420) der Electrically-Erasable-Programmable-Read-only-Memory-Emulation des zweiten Speichers (220) nicht mehr benötigten Speicherkapazität, wodurch sich die freie Speicherkapazität des zweiten Speichers (220) erhöht, und
- Ablegen (32002) der zweiten Information (120) in den zweiten Speicher (220).

10. Das Verfahren gemäß Anspruch 9, ferner aufweisend:
- falls die freie Speicherkapazität des zweiten Speichers (220) nach Freigeben (421) der durch das Abschalten (420) der Electrically-Erasable-Programmable-Read-only-Memory-Emulation des zweiten Speichers (220) nicht mehr benötigten Speicherkapazität nicht ausreichend groß ist, um die zweite Information (120) aufzunehmen,
- Aufteilen (4122) der zweiten Information (120) in einen ersten Teil (121) und in einen zweiten Teil (122), wobei
- der erste Teil (121) der zweiten Information (120) eine Größe aufweist, welche maximal der freien Speicherkapazität des zweiten Speichers (220) entspricht,
- Ablegen (410) des ersten Teils (121) der zweiten Information (120) in den zweiten Speicher (220),
- Ablegen (410) des zweiten Teils (122) der zweiten Information (120) in einen dritten Speicher (230), und wobei
- der zweiten Speicher (220) einen schnelleren Zugriff auf die in ihm abgelegten Informationen ermöglicht als der dritte Speicher (230).

11. Das Verfahren gemäß irgendeinem der vorhergehenden Ansprüche, ferner aufweisend:
- vor dem Ablegen (412) der entsprechenden Information, des entsprechenden Teiles der entsprechenden Information oder des entsprechenden Unterteiles des entsprechenden Teiles der entsprechenden Information in den entsprechenden Speicher: Expandieren (500) der entsprechenden Information, des entsprechenden Teiles der entsprechenden Information oder des entsprechenden Unterteiles des entsprechenden Teiles der entsprechenden Information aus dem zweiten Speicher (220), dem dritten Speicher (230) und/oder dem weiteren Speicher (240), und
- wobei der erste Speicher (210) einen schnelleren Zugriff auf die in ihm abgelegten Informationen ermöglicht als der weitere Speicher (240).

12. Eine Micro-Controller Vorrichtung, aufweisend einen Micro-Controller mit einem ersten Speicher (210) und einem zweiten Speicher (220), wobei
der erste Speicher (210)
- einen wahlfreien Zugriff ermöglicht,
- das Ausführen von ausführbarem Code ermöglicht, und
- einen schnelleren Zugriff auf die in ihm abgelegten Informationen ermöglicht als der zweite Speicher (220),
der zweite Speicher (220) ein Flash-Speicher ist, welcher eine Electrically-Erasable-Programmable-Read-only-Memory-Emulation ermöglicht, wobei
die Electrically-Erasable-Programmable-Read-only-Memory-Emulation des zweiten Speichers (220) abschaltbar ist, und
die Micro-Controller Vorrichtung dazu eingerichtet ist, das Verfahren gemäß irgendeinem der Ansprüche 1 bis 11 auszuführen.

13. Die Vorrichtung gemäß Anspruch 12, ferner aufweisend
einen dritten Speicher (230), wobei
der dritte Speicher (230) einen schnelleren Zugriff auf die in ihm abgelegten Informationen ermöglicht als der zweite Speicher (220), und wobei
der dritte Speicher (230) vorzugsweise ein Electrically-Erasable-Programmable-Read-only-Memory-Speicher ist.

14. Die Vorrichtung gemäß Anspruch 12 oder 13, ferner aufweisend
einen weiteren Speicher (240), wobei
der erste Speicher (210) einen schnelleren Zugriff auf die in ihm abgelegten Informationen ermöglicht als der weitere Speicher (240), und wobei
der zweite (220) und/oder dritte Speicher (230) vorzugsweise einen schnelleren Zugriff auf die'in ihm abgelegten Informationen ermöglichen als der weitere Speicher (240).

15. Ein Kraftfahrzeug, aufweisend eine Micro-Controller Vorrichtung gemäß irgendeinem der Ansprüche 12 bis 14.

## Claims

1. A method for providing an increased available flash memory in a microcontroller having an electrically erasable programmable read-only memory emulation, wherein a first memory (210) and a second memory (220) are provided in the microcontroller in order to store a piece of information (100) that is to be stored,
- wherein the first memory (210)
- allows random access,
- allows the execution of executable code, and
- allows faster access to the information stored in it than the second memory (220),
- wherein the second memory (220) is the flash memory, which allows an electrically erasable programmable read-only memory emulation, and
- wherein the electrically erasable programmable read-only memory emulation of the second memory (220) can be shut off, and
wherein the method comprises:
- dividing (400) the information (100) into a first piece of information (110) comprising executable code and into a second piece of information (120) comprising data,
- if a free storage capacity of the first memory (210) is sufficiently large to receive the first piece of information (110),
- storing (31001) the first piece of information (110) in the first memory (210),
- if a free storage capacity of the second memory (220) is sufficiently large to receive the second piece of information (120),
- storing (32002) the second piece of information (120) in the second memory (220),
- if the free storage capacity of the second memory (220) is not sufficiently large to receive the second piece of information (120),
- shutting off (420) the electrically erasable programmable read-only memory emulation of the second memory (220),
- freeing up (421) the storage capacity no longer required as a result of shutting off (420) the electrically erasable programmable read-only memory emulation of the second memory (220), whereby the free storage capacity of the second memory (220) is increased,
- storing (32002) the second piece of information (120) in the second memory (220).

2. The method according to claim 1, further comprising
- if the free storage capacity of the second memory (220) is not sufficiently large to receive the second piece of information (120) after the storage capacity that is no longer required as a result of shutting off (420) the electrically erasable programmable read-only memory emulation of the second memory (220) has been freed up (421),
- dividing (422) the second piece of information (120) into a first portion (121) and into a second portion (122), wherein
- the first portion (121) of the second piece of information (120) has a size that, at most, corresponds to the free storage capacity of the second memory (220),
- storing (32102) the first portion (121) of the second piece of information (120) in the second memory (220),
- storing (32203) the second portion (122) of the second piece of information (120) in a third memory (230), and wherein
- the first memory (210) allows faster access to the information stored in it than the third memory (230).

3. A method for providing an increased available flash memory in a microcontroller having an electrically erasable programmable read-only memory emulation, wherein a first memory (210) and a second memory (220) are provided in the microcontroller in order to store a piece of information (100) that is to be stored,
- wherein the first memory (210)
- allows random access,
- allows the execution of executable code, and
- allows faster access to the information stored in it than the second memory (220),
- wherein the second memory (220) is the flash memory, which allows an electrically erasable programmable read-only memory emulation, and
- wherein the electrically erasable programmable read-only memory emulation of the second memory (220) can be switched off, wherein the method comprises:
- dividing (400) the information (100) into a first piece of information (110) comprising executable code and into a second piece of information (120) comprising data,
- if a free storage capacity of the first memory (210) is sufficiently large to receive the first piece of information (110),
- storing (31001) the first piece of information (110) in the first memory (210),
- if the free storage capacity of the first memory (210) is sufficiently large to receive the second piece of information (120),
- storing (32001) the second piece of information (120) in the first memory (210),
- if the free storage capacity of the first memory (210) is not sufficiently large to receive the second piece of information (120),
- dividing (422) the second piece of information (120) into a first portion (121) and into a second portion (122), wherein
- the first portion (122) of the second piece of information (120) has a size that, at most, corresponds to the free storage capacity of the first memory (210),
- storing (32101) the first portion (121) of the second piece of information (120) in the first memory (210), and
- if the free storage capacity of the second memory (220) is sufficiently large to receive the second portion (122) of the second piece of information (120),
- storing (32202) the second portion (122) of the second piece of information (120) in the second memory (220),
- or, if the free storage capacity of the second memory (220) is not sufficiently large to receive the second piece of information (120),
- shutting off (420) the electrically erasable programmable read-only memory emulation of the second memory (220),
- freeing up (421) the storage capacity no longer required as a result of shutting off (420) the electrically erasable programmable read-only memory emulation of the second memory (220), whereby the free storage capacity of the second memory (220) is increased,
- storing (32202) the second portion (122) of the second piece of information (120) in the second memory (220).

4. The method according to claim 3, further comprising:
- if the free storage capacity of the second memory is not sufficiently large to receive the second portion (122) of the second piece of information (120) after the storage capacity that is no longer required as a result of shutting off (420) the electrically erasable programmable read-only memory emulation of the second memory (220) has been freed up (421),
- dividing (4222) the second portion (122) of the second piece of information (120) into a first sub-portion (1221) and into a second sub-portion (1222), wherein
- the first sub-portion (1221) of the second portion (122) of the second piece of information (120) has a size that, at most, corresponds to the free storage capacity of the second memory (220),
- storing (32212) the first sub-portion (1221) of the second portion (122) of the second piece of information (120) in the second memory (220),
- storing (32223) the second sub-portion (1222) of the second portion (122) of the second piece of information (120) in a third memory (230), and wherein
- the first memory (210) allows faster access to the information stored in it than the third memory (230).

5. The method according to any one of the preceding claims, further comprising:
- if the free storage capacity of the first memory (210) is not sufficiently large to receive the first piece of information (110),
- dividing (412) the first piece of information (110) into a first portion (111) and into a second portion (112), wherein
- the first portion (111) of the first piece of information (110) has a size that, at most, corresponds to the free storage capacity of the first memory (210),
- storing (31101) the first portion (111) of the first piece of information (110) in the first memory (210), and
- storing (31202) the second portion (112) of the first piece of information (110) in the second memory (220).

6. The method according to claim 5, further comprising:
- if the free storage capacity of the second memory (220) is not sufficiently large to receive the second portion (112) of the first piece of information (110),
- shutting off (420) the electrically erasable programmable read-only memory emulation of the second memory,
- freeing up (421) the storage capacity no longer required as a result of shutting off (420) the electrically erasable programmable read-only memory emulation of the second memory (220), whereby the free storage capacity of the second memory (220) is increased, and
- storing (31202) the second portion (112) of the first piece of information (110) in the second memory (220).

7. The method according to claim 6, further comprising:
- if the free storage capacity of the second memory (220) is sufficiently large to receive the second piece of information (120) after shutting off (420) the electrically erasable programmable read-only memory emulation of the second memory (220),
- storing (32002) the second piece of information (120) in the second memory (220),
- or, if the free storage capacity of the second memory (220) is not sufficiently large to receive the second piece of information (120) after shutting off (420) the electrically erasable programmable read-only memory emulation of the second memory (220),
- dividing (422) the second piece of information (120) into a first portion (121) and into a second portion (122), wherein
- the first portion (121) of the second piece of information (120) has a size that, at most, corresponds to the free storage capacity of the second memory (220),
- storing (32102) the first portion (121) of the second piece of information (120) in the second memory (220), and
- storing (32203) the second portion (122) of the second piece of information (120) in the, or a, third memory (230).

8. The method according to claim 6 or 7, further comprising:
- if the free storage capacity of the second memory (220) is not sufficiently large to receive the second portion (112) of the first piece of information (110) after the storage capacity that is no longer required as a result of shutting off (420) the electrically erasable programmable read-only memory emulation of the second memory (220) has been freed up (421),
- dividing (4122) the second portion (112) of the first piece of information (110) into a first sub-portion (1121) and into a second sub-portion (1122), wherein
- the first sub-portion (1121) of the second portion (112) of the first piece of information (110) has a size that, at most, corresponds to the free storage capacity of the second memory (220),
- storing (31212) the first sub-portion (1121) of the second portion (112) of the first piece of information (110) in the second memory (220),
- storing (31223) the second sub-portion (1122) of the second portion (112) of the first piece of information (110) in a third memory (230),
- storing (32003) the second piece of information (120) in the third memory (230) and/or a further memory (240), and wherein
- the second memory (220) allows faster access to the information stored in it than the third memory (230) and/or the further memory (240).

9. The method according to claim 5, further comprising:
- if the free storage capacity of the second memory (220) is sufficiently large to receive the second piece of information (120),
- storing (32002) the second piece of information (120) in the second memory (220),
- or if the free storage capacity of the second memory (220) is not sufficiently large to receive the second piece of information (120),
- shutting off (420) the electrically erasable programmable read-only memory emulation of the second memory (220),
- freeing up (421) the storage capacity no longer required as a result of shutting off (420) the electrically erasable programmable read-only memory emulation of the second memory (220), whereby the free storage capacity of the second memory (220) is increased, and
- storing (32002) the second piece of information (120) in the second memory (220).

10. The method according to claim 9, further comprising:
- if the free storage capacity of the second memory (220) is not sufficiently large to receive the second piece of information (120) after the storage capacity that is no longer required as a result of shutting off (420) the electrically erasable programmable read-only memory emulation of the second memory (220) has been freed up (421),
- dividing (4122) the second piece of information (120) into a first portion (121) and into a second portion (122), wherein
- the first portion (121) of the second piece of information (120) has a size that, at most, corresponds to the free storage capacity of the second memory (220),
- storing (410) the first portion (121) of the second piece of information (120) in the second memory (220),
- storing (410) the second portion (122) of the second piece of information (120) in a third memory (230), and wherein
- the second memory (220) allows faster access to the information stored in it than the third memory (230).

11. The method according to any one of the preceding claims, further comprising:
- prior to storing (412) the corresponding piece of information, the corresponding portion of the corresponding piece of information, or the corresponding sub-portion of the corresponding portion of the corresponding piece of information, in the corresponding memory: expanding (500) the corresponding piece of information, the corresponding portion of the corresponding piece of information, or the corresponding sub-portion of the corresponding portion of the corresponding piece of information from the second memory (220), the third memory (230) and/or the further memory (240), and
- wherein the first memory (210) allows faster access to the information stored in it than the further memory (240).

12. A microcontroller device, comprising a microcontroller having a first memory (210) and a second memory (220), wherein the first memory (210)
- allows random access,
- allows executable code to be executed, and
- allows faster access to the information stored in it than the second memory (220),
the second memory (220) is a flash memory, which allows electrically erasable programmable read-only memory emulation, wherein
the electrically erasable programmable read-only memory emulation of the second memory (220) can be shut off, and
the microcontroller device is configured to carry out the method according to any one of claims 1 to 11.

13. The device according to claim 12, further comprising
a third memory (230), wherein
the third memory (230) allows faster access to the information stored in it than the second memory (220), and wherein
the third memory (230) is preferably an electrically erasable programmable read-only memory.

14. The device according to claim 12 or 13, further comprising:
a further memory (240), wherein
the first memory (210) allows faster access to the information stored in it than the further memory (240), and wherein
the second (220) and/or third memory (230) preferably allow faster access to the information stored in it than the further memory (240).

15. A motor vehicle, comprising a microcontroller device according to any one of claims 12 to 14.

## Revendications

1. Procédé permettant d'obtenir une mémoire flash ayant une disponibilité augmentée dans un microcontrôleur comprenant une émulation de mémoire morte effaçable et programmable électriquement,
selon lequel une première mémoire (210) et une seconde mémoire (220) sont prévues dans le microcontrôleur pour stocker une information devant être déposée (100),
- la première mémoire (210),
- permettant un accès aléatoire,
- permettant l'exécution de codes exécutables, et
- permettant un accès plus rapide aux informations déposées dans celle-ci que la seconde mémoire (220),
- la seconde mémoire (220) étant la mémoire flash qui permet une émulation de mémoire morte et effaçable et programmable électriquement, et
- l'émulation de mémoire morte effaçable et programmable électriquement de la seconde mémoire (220) pouvant être coupée, et
le procédé comprenant des étapes consistant à :
- subdiviser (400) l'information (100) en une première information (110) comprenant un code exécutable et en une seconde information (120) comprenant des données,
- lorsque la capacité de mémoire libre de la première mémoire (210) est suffisamment grande pour héberger la première information (110),
- déposer (31001) la première information (110) dans la première mémoire (210),
- lorsque la capacité de mémoire libre de la seconde mémoire (220) est suffisamment grande pour héberger la seconde information (220),
- déposer (32002) la seconde information (120) dans la seconde mémoire (220),
- lorsque la capacité de mémoire libre de la seconde mémoire (220) n'est pas suffisamment grande pour héberger la seconde information (120),
- couper (420) l'émulation de mémoire morte effaçable et programmable électriquement de la seconde mémoire (220),
- libérer (421) la capacité de mémoire qui n'est plus nécessaire du fait de la coupure (420) de l'émulation de mémoire morte effaçable et programmable électriquement de la seconde mémoire (220) de sorte que la capacité de mémoire libre de la seconde mémoire (220) soit augmentée,
- déposer (32002) la seconde information (120) dans la seconde mémoire (220).

2. Procédé conforme à la revendication 1,
comprenant en outre les étapes suivantes consistant à :
- lorsque la capacité de mémoire libre de la seconde mémoire (220) n'est pas après la libération (420) de la capacité de mémoire (421) qui n'est plus nécessaire du fait de la coupure (420) de l'émulation de mémoire morte effaçable et programmable électriquement de la seconde mémoire (220) suffisante pour héberger la seconde information (120),
- subdiviser (422) la seconde information (120) en une première partie (121) et en une seconde partie (122),
- la première partie (121) de la seconde information (120) ayant une dimension qui correspond au maximum à la capacité de mémoire libre de la seconde mémoire (220),
- déposer (32102) la première partie (121) de la seconde information (120) dans la seconde mémoire (220),
- déposer (32203) la seconde partie (122) de la seconde information (120) dans une troisième mémoire (230),
- la première mémoire (210) permettant un accès plus rapide aux informations déposées dans celle-ci que la troisième mémoire (230).

3. Procédé permettant d'obtenir une mémoire flash ayant une disponibilité augmentée dans un microcontrôleur comprenant une émulation de mémoire morte effaçable et programmable électriquement,
une première mémoire (210) et une seconde mémoire (220) étant prévues dans le microcontrôleur pour permettre de stocker une information (100) à déposer,
- la première mémoire (210),
- permettant un accès aléatoire,
- permettant l'exécution d'un code exécutable, et
- permettant un accès plus rapide aux informations déposées dans celle-ci que la seconde mémoire (220),
- la seconde mémoire (220) étant la mémoire flash qui permet une émulation de mémoire morte effaçable et programmable électriquement, et
- l'émulation de mémoire morte effaçable et programmable électriquement de la seconde mémoire (220) pouvant être coupée,
- ce procédé comprenant des étapes consistant à :
- subdiviser (400) l'information (100) en une première information (110) comprenant un code exécutable et en une seconde information (120) comprenant des données,
- lorsque la capacité de mémoire libre de la première mémoire (210) est suffisamment grande pour héberger la première information (110),
- déposer (31001) la première information (110) dans la première mémoire (210),
- lorsque la capacité de mémoire libre de la première mémoire (210) est suffisamment grande pour héberger la seconde information (220),
- déposer (32001) la seconde information (120) dans la première mémoire (210),
- lorsque la capacité de mémoire libre de la première mémoire (210) n'est pas suffisamment grande pour héberger la seconde information (120),
- subdiviser (422) la seconde information (120) en une première partie (121) et en une seconde partie (122),
- la première partie (122) de la seconde information (120) ayant une dimension qui correspond au maximum à la capacité de mémoire libre de la première mémoire (210),
- déposer (32101) la première partie (121) de la seconde information (120) dans la première mémoire (210), et
- lorsque la capacité de mémoire libre de la seconde mémoire (220) est suffisamment grande pour héberger la seconde partie (122) de la seconde information (120),
- déposer (32202) la seconde partie (122) de la seconde information (120) dans la seconde mémoire (220), ou
- lorsque la capacité de mémoire libre de la seconde mémoire (220) n'est pas suffisamment grande pour héberger la seconde information (120),
- couper (420) l'émulation de mémoire morte effaçable et programmable électriquement de la seconde mémoire (220),
- libérer (421) la capacité de mémoire qui n'est plus nécessaire du fait de la coupure (420) de l'émulation de mémoire morte effaçable et programmable électriquement de la seconde mémoire (220) de sorte que la capacité de mémoire libre de la seconde mémoire (220) soit augmentée,
- déposer (32202) la seconde partie (122) de la seconde information (120) dans la seconde mémoire (220).

4. Procédé conforme à la revendication 3,
comprenant en outre les étapes consistant à :
- lorsque la capacité de mémoire libre (421) de la seconde mémoire n'est pas, après la libération de la capacité de mémoire qui n'est plus nécessaire du fait de la coupure (420) de l'émulation de mémoire morte effaçable et programmable électriquement de la seconde mémoire (220) suffisamment grande, pour héberger la seconde partie (122) de la seconde information (120),
- subdiviser (4222) la seconde partie (122) de la seconde information (120) en une première sous-partie (1221) et en une seconde sous-partie (1222),
- la première sous-partie (1221) de la seconde partie (122) de la seconde information (120) ayant une dimension qui correspond au maximum à la capacité de mémoire libre de la seconde mémoire (220),
- déposer (32212) la première sous-partie (1221) de la seconde partie (122) de la seconde information (120) dans la seconde mémoire (220), et
- déposer (32223) la seconde sous-partie (1222) de la seconde partie (122) de la seconde information (120) dans une troisième mémoire (230),
- la première mémoire (210) permettant un accès plus rapide aux informations déposées dans celle-ci que la troisième mémoire (230).

5. Procédé conforme à l'une quelconque des revendications précédentes,
comprenant en outre des étapes consistant à :
- lorsque la capacité de mémoire libre de la première mémoire (210) n'est pas suffisamment grande pour héberger la première information (110),
- subdiviser (412) la première information (110) en une première partie (111) et en une seconde partie (112),
- la première partie (111) de la première information (110) ayant une dimension qui correspond au maximum à la capacité de mémoire libre de la première mémoire (210),
- déposer (31101) la première partie (111) de la première information (110) dans la première mémoire (210), et
- déposer (31202) la seconde partie (112) de la première information (110) dans la seconde mémoire (220).

6. Procédé conforme à la revendication 5,
comprenant en outre des étapes consistant à :
- lorsque la capacité de mémoire libre de la seconde mémoire (220) n'est pas suffisamment grande pour héberger la seconde partie (112) de la première information (110),
- couper (420) l'émulation de mémoire morte effaçable et programmable électriquement de la seconde mémoire,
- libérer (421) la capacité de mémoire qui n'est plus nécessaire du fait de la coupure (420) de l'émulation de mémoire morte effaçable et programmable électriquement de la seconde mémoire (220), de sorte que la capacité de mémoire libre de la seconde mémoire (220) soit augmentée, et
- déposer (31202) la seconde partie (112) de la première information (110) dans la seconde mémoire (220).

7. Procédé conforme à la revendication 6,
comprenant en outre les étapes suivantes consistant à :
- lorsque la capacité de mémoire libre de la seconde mémoire (220) est, après la coupure (420) de l'émulation de mémoire morte effaçable et programmable électriquement de la seconde mémoire (220) suffisamment grande pour héberger la seconde information (120),
- déposer (32002) la seconde information (120) dans la seconde mémoire (220), ou
- lorsque la capacité de mémoire de la seconde mémoire (220) n'est pas, après la coupure (420) de l'émulation de mémoire morte effaçable et programmable électriquement de la seconde mémoire (220) suffisamment grande pour héberger la seconde information (120),
- subdiviser (422) la seconde information (120) en une première partie (121) et en une seconde partie (122),
- la première partie (121) de la seconde information (120) ayant une dimension qui correspond au maximum à la capacité de mémoire libre de la seconde mémoire (220),
- déposer (32102) la première partie (121) de la seconde information (120) dans la seconde mémoire (220), et
- déposer (32203) la seconde partie (122) de la seconde information (120) dans la ou une troisième mémoire (230).

8. Procédé conforme à la revendication 6 ou 7,
comprenant en outre les étapes suivantes consistant à :
- lorsque la capacité de mémoire libre de la seconde mémoire (220) n'est pas après la libération (421) de la capacité de mémoire qui n'est plus nécessaire du fait de la coupure (420) de l'émulation de mémoire morte effaçable et programmable électriquement de la seconde mémoire (220) suffisamment grande pour héberger la seconde partie (112) de la première information (110),
- subdiviser (4122) la seconde partie (112) de la première information (110) en une première sous-partie (1121) et en une seconde sous-partie (1122),
- la première sous-partie (1121) de la seconde partie (112) de la première information (110) ayant une dimension qui correspond au maximum à la capacité de mémoire libre de la seconde mémoire (220),
- déposer (31212) la première sous-partie (1121) de la seconde partie (112) de la première information (110) dans la seconde mémoire (220),
- déposer (31223) la seconde sous-partie (1122) de la seconde partie (112) de la première information (110) dans une troisième mémoire (230), et
- déposer (32003) la seconde information (120) dans la troisième mémoire (230) et/ou dans une autre mémoire (240),
- la seconde mémoire (220) permettant un accès plus rapide aux informations déposées dans celle-ci que la troisième mémoire (230) et/ou l'autre mémoire (240).

9. Procédé conforme à la revendication 5,
comprenant en outre les étapes suivantes consistant à :
- lorsque la capacité de mémoire libre de la seconde mémoire (220) est suffisamment grande pour héberger la seconde information (120),
- déposer (32002) la seconde information (120) dans la seconde mémoire (220), ou
- lorsque la capacité de mémoire libre de la seconde mémoire (220) n'est pas suffisamment grande pour héberger la seconde information (120),
- couper (420) l'émulation de mémoire morte effaçable et programmable électriquement de la seconde mémoire (220),
- libérer (421) la capacité de mémoire qui n'est plus nécessaire du fait de la coupure (420) de l'émulation de mémoire morte effaçable et programmable électriquement de la seconde mémoire (220), de sorte que la capacité de mémoire libre de la seconde mémoire (220) soit augmentée, et
- déposer (32002) la seconde information (120) dans la seconde mémoire (220).

10. Procédé conforme à la revendication 9,
comprenant en outre les étapes suivantes consistant à :
- lorsque la capacité de mémoire libre de la seconde mémoire (220) n'est pas, après libération (421) de la capacité de mémoire qui n'est plus nécessaire du fait de la coupure (420) de l'émulation de mémoire morte effaçable et programmable électriquement de la seconde mémoire (220) suffisamment grande pour héberger la seconde information (120),
- subdiviser (4122) la seconde information (120) en une première partie (121) et en une seconde partie (122),
- la première partie (121) de la seconde information (120) ayant une dimension qui correspond au maximum à la capacité de mémoire libre de la seconde mémoire (220),
- déposer (410) la première partie (121) de la seconde information (120) dans la seconde mémoire (220), et
- déposer (410) la seconde partie (122) de la seconde information (120) dans une troisième mémoire (230),
- la seconde mémoire (220) permettant un accès plus rapide aux informations déposées dans celle-ci que la troisième mémoire (230).

11. Procédé conforme à l'une quelconque des revendications précédentes,
comprenant en outre les étapes suivantes consistant à :
- avant le dépôt (412) de l'information correspondante, de la partie correspondante de l'information correspondante ou de la sous-partie correspondante de la partie correspondante de l'information correspondante dans la mémoire correspondante, développer (500) l'information correspondante, la partie correspondante de l'information correspondante ou la sous-partie correspondante de la partie correspondante de l'information correspondante de la seconde mémoire (220) de la troisième mémoire (230) et/ou de l'autre mémoire (240),
- la première mémoire (210) permettant un accès plus rapide aux informations déposées dans celle-ci que les autres mémoires (240).

12. Dispositif de microcontrôleur comprenant un microcontrôleur comportant une première mémoire (210) et une seconde mémoire (220), dans lequel
la première mémoire (210) permet un accès aléatoire,
- permet l'exécution de codes exécutables, et
- permet un accès plus rapide aux informations déposées dans celle-ci que la seconde mémoire (220),
la seconde mémoire (220) est une mémoire flash qui permet une émulation de mémoire morte effaçable et programmable électriquement, l'émulation de mémoire morte effaçable et programmable électriquement de la seconde mémoire (220) pouvant être coupée, et
le dispositif de microcontrôleur étant réalisé pour permettre la mise en œuvre du procédé conforme à l'une quelconque des revendications 1 à 11.

13. Dispositif conforme à la revendication 12,
comprenant en outre :
une troisième mémoire (230),
la troisième mémoire (230) permettant un accès plus rapide aux informations déposées dans celle-ci que la seconde mémoire (220), et
la troisième mémoire (230) étant, de préférence, une mémoire morte effaçable et programmable électriquement.

14. Dispositif conforme à la revendication 12 ou 13,
comprenant en outre :
une autre mémoire (240),
la première mémoire (210) permettant un accès plus rapide aux informations stockées dans celle-ci que l'autre mémoire (240), et
la seconde mémoire (220) et/ou la troisième mémoire (230) permettant de préférence un accès plus rapide aux informations stockées dans celle-ci que l'autre mémoire (240).

15. Véhicule comprenant un dispositif de microcontrôleur conforme à l'une quelconque des revendications 12 à 14.
